# EUROPÄISCHE PATENTANMELDUNG

(11) **EP 1 464 714 A1**
(43) Veröffentlichungstag der Anmeldung: **06.10.2004**
(21) Anmeldenummer: 03028092.9
(22) Anmeldetag: 09.12.2003
(51) Int. Cl.: C22C 5/08, F21V 7/22

(54) **Legierungen sowie Reflektorschicht, und deren Verwendung**

(30) Priorität: 13.02.2003 DE 10306174
(71) Anmelder: W.C. Heraeus GmbH & Co. KG, 63450 Hanau (DE)
(72) Erfinder: Specht, Heiko, 63739 Aschaffenburg (DE); Warkentin, Oliver, Dr., 64285 Darmstadt (DE); Halden, Torsten, Dr., 63546 Hammersbach (DE)
(74) Vertreter: Kühn, Hans-Christian

(57) **Zusammenfassung**

Die Erfindung betrifft Legierungen und Reflektorschichten, die auf Silber basieren und mindestens drei unterschiedliche chemische Elemente enthalten, sowie deren Verwendung. Die auf Silber basierenden Legierungen sowie Reflektorschichten werden für reflektive Schichten mit einem Reflexionsvermögen im sichtbaren Spektralbereichs des Tageslichtes von über 90% eingesetzt und weisen dabei eine hohe Witterungsbeständigkeit gegenüber Chlor und Schwefel auf.

## Beschreibung

Die Erfindung betrifft Legierungen und Reflektorschichten, die auf Silber basieren und mindestens drei unterschiedliche chemische Elemente enthalten, sowie deren Verwendung.

Eine Legierung aus den Metallen Gold, Silber, Aluminium, Platin, Rhodium oder Kupfer ist aus US 4,762,770 bekannt. Dabei wird entweder aus den reinen Metallen oder aber aus einer Legierung mit diesen Elementen eine Reflektorschicht gebildet, über welcher eine optische Speicherschicht zur Bildung einer optischen Speicherplatte angeordnet wird.

Eine weitere Legierung aus den Metallen Gold oder Silber sowie mindestens zwei Metallen der Gruppe umfassend unter anderem Platin, Iridium, Rhodium, und Kupfer ist aus der US, 2,947,623 bekannt.

Die FR 922 234 offenbart ein Verfahren zu Gewinnung von nichtschwefelbaren, nichtoxidierbaren und unzerstörbaren Silberlegierungen, wobei unter vielen möglichen Legierungsmetallen auch Aluminium, Titan, Gold, Platin, andere Platingruppenmetalle und Silizium genannt sind, ohne dabei genauere Zusammensetzungen anzugeben.

DE 2102980 offenbart eine Silberlegierung mit nur einem Element der Gruppe umfassend unter anderem Al, Si, Ti und Ta.

Weiterhin sind Legierungen für reflektive beziehungsweise semi-reflektive Schichten eines optischen Speichermediums aus US 6,280,811 B1 bekannt. Dabei sind Silberlegierungen mit Anteilen an Iridium, Platin, Kupfer, Gold und Rhodium offenbart.

Die EP 1 213 599 A2 offenbart eine reflektierende Silber-Schicht, die 0.1 - 3 Gew.-% Gold, Palladium oder Ruthenium sowie 0.1-3 Gew.-% Kupfer, Titan, Chrom, Tantal, Molybdän, Nickel, Aluminium, Niob, Gold, Palladium oder Ruthenium enthält, wobei der Silber-Schicht zwei unterschiedliche Metalle zugesetzt sind.

Die EP 304 927 B1 offenbart ein magnetisches Speichermedium mit einem Substrat und einer magnetischen Schicht, wobei zwischen dem Substrat und der magnetischen Schicht eine Zwischenschicht aus mindestens einem der Metalle Kupfer, Rhodium, Palladium, Silber, Iridium, Platin, Gold, Aluminium oder Wolfram gebildet ist.

Die EP 1 028 421 A2 offenbart eine mehrschichtige optische Platte mit mindestens zwei Schichten zur Datenaufzeichnung, die mit einer transparenten Schicht sowie einer lichtdurchlässigen Schutzschicht bedeckt sind. Dabei enthält mindestens eine der zwei Schichten zur Datenaufzeichnung mindestens ein Element einer Gruppe, die unter vielen anderen auch die Elemente Silber, Gold, Aluminium, Kupfer, Ruthenium, Rhodium, Silizium, Titan und Tantal nennt.

Die EP 304 873 B1 offenbart ein magneto-optisches Aufzeichnungsmedium mit einem Substrat und altemierend angeordneten Kobaltschichten und Platin- und/oder Palladium-Schichten als Aufzeichnungsschicht. Zwischen dem Substrat und der Aufzeichnungsschicht ist eine Unterschicht angeordnet, die aus mindestens einem Element der Gruppe Silber, Palladium, Rhodium, Kupfer, Wolfram, Iridium, Platin und Gold besteht.

Die WO 99/67084 offenbart Metall-Legierungen für reflektive oder semi-reflektive Schichten eines optischen Speichermediums. Als Metall-Legierungen sind dabei insbesondere Silber-Palladium-Kupfer- und Silber-Palladium-Rhodium-Legierungen genannt.

Die EP 1 103 758 A2 offenbart eine Reflektorschicht aus einer Silber-Palladium-Kupfer-Legierung für eine Lampe, wobei der Palladiumgehalt im Bereich von 0,5 bis 3 Gew.-% und der Kupfergehalt im Bereich von 0,1 bis 3 Gew.-% liegt. Weiterhin ist offenbart, ein Sputtertarget oder ein verdampfbares Material aus der Silber-Palladium-Kupfer-Legierung bereitzustellen.

Die EP 1 069 194 A1 offenbart eine Metall-Legierung für elektronische Teile mit 0.1 bis 3.0 Gew.-% Palladium, 0.1 bis 3.0 Gew.-% Kupfer und Rest Silber. Weiterhin ist offenbart, die Metall-Legierung für ein Sputtertarget zu verwenden.

Die JP 2000-149327 A offenbart ein optisches Speichermedium mit einer reflektiven Schicht aus Silber und Legierungen aus der Gruppe der Elemente Wolfram, Magnesium, Bor, Aluminium, Gallium, Kupfer und Rhodium.

Weiterhin offenbart die JP 04372738 A ein optisches Aufzeichnungsmedium mit einer reflektiven Schicht, die neben Kupfer mindestens ein weiteres chemisches Element der Gruppe Ti, V, Ta, Cr, Mo, W, Mn, Fe, Co, Rh, Ni, Pd, Pt, Ag, Au, Al, N, und O enthält.

Die JP 2002092950 A offenbart ein optisches Aufzeichnungsmedium mit einer Reflexionsschicht aus Silber oder einer Silberlegierung mit mindestens 90 % Silberanteil. Eine Angabe, aus welchen weiteren Elementen die Silberlegierung für die Reflexionsschicht besteht, ist nicht vorhanden.

Die JP 2001256673 A offenbart ein optisches Aufzeichnungsmedium mit einer Reflexionsschicht, die aus Ti, Zr, Ta, Cr, Mo, W, Ni, Rh, Pd, Pt, Cu, Ag, Au, Zn, Al, In, Si, Ge, Te, Sn, Bi, Sb, TI oder Pt gebildet ist.

Die JP 10228676 A beschreibt ein optisches Aufzeichnungsmedium mit einer ersten Reflexionsschicht, deren Zusammensetzung die Elemente Al, Cu, Ag, Au, Pt und Pd umfasst, wobei die Summe dieser Elemente in der Zusammensetzung ≥ 65 % bis ≤ 95 % beträgt.

Es ist nun Aufgabe der Erfindung, auf Silber basierende Legierungen sowie Reflektorschichten bereitzustellen, die für reflektive Schichten mit einem Reflexionsvermögen im sichtbaren Spektralbereichs des Tageslichtes von über 90% eingesetzt werden können und dabei eine hohe Witterungsbeständigkeit gegenüber Chlor und Schwefel aufweisen. Weiterhin sollen geeignete Verwendungen für die Legierungen und Reflektorschichten angegeben werden.

Die Aufgabe wird für eine erste Legierung dadurch gelöst, dass die Legierung aus
- 0.1 bis 3.0 Gew.-%: Rhenium oder Rhenium und mindestens einem Element der Gruppe umfassend Rhodium, Platin und Iridium,
- 0.1 bis 3.0 Gew.-%: Kupfer und/oder Platin und/oder Titan und/oder Gold und/oder Aluminium und/oder Tantal und/oder Silizium und
Rest Silber besteht.

Die Aufgabe wird für eine zweite Legierung dadurch gelöst, dass die Legierung aus
- 0.1 bis 3.0 Gew.-%: Rhodium,
- 0.1 bis 3.0 Gew.-%: Kupfer und/oder Titan und/oder Aluminium und/oder Tantal und/oder Silizium und
- ≥ 94 bis < 99 Gew.-%: Silber besteht.

Insbesondere ist eine Legierung bevorzugt, die aus
- 0.1 bis 3.0 Gew.-%: Rhodium,
- 0.1 bis 3.0 Gew.-%: Kupfer oder Titan und
- ≥ 94 bis < 99 Gew.-%: Silber besteht.

Besonders bewährt hat sich dabei eine Legierung aus
- 1 Gew.-%: Rhodium,
- 1 Gew.-%: Kupfer oder Titan und
Rest Silber.

Die Aufgabe wird für eine dritte Legierung dadurch gelöst, dass die Legierung aus
- 0.1 bis 3.0 Gew.-%: Platin,
- 0.1 bis 3.0 Gew.-%: Titan und/oder Aluminium und/oder Tantal und/oder Silizium und
Rest Silber besteht.

Insbesondere ist eine Legierung bevorzugt, die aus
- 0.1 bis 3.0 Gew.-%: Platin,
- 0.1 bis 3.0 Gew.-%: Titan und
Rest Silber besteht.

Besonders bewährt hat sich dabei eine Legierung aus
- 1 Gew.-%: Platin,
- 1 Gew.-%: Titan und
Rest Silber.

Die Aufgabe wird für eine vierte Legierung dadurch gelöst, dass die Legierung aus
- 0.1 bis 3.0 Gew.-%: Iridium,
- 0.1 bis 3.0 Gew.-%: Titan und/oder Aluminium und/oder Tantal und/oder Silizium und
Rest Silber besteht.

Die erfindungsgemäßen Legierungen weisen ein Reflexionsvermögen im sichtbaren Spektralbereichs des Tageslichtes von über 90% auf, wobei gleichzeitig eine hohe Witterungsbeständigkeit gegenüber Chlor und Schwefel auftritt.

Die Witterungsbeständigkeit dieser Legierungen wurde getestet, indem eine dünne, durch Kathodenzerstäuben gebildete Schicht sowie eine Vergleichsschicht gemäß dem Stand der Technik unterschiedlichen Klimatests unterzogen wurde. Beispielhaft werden nachfolgend die Tests zu der erfindungsgemäßen Legierung mit 98 Gew.-% Silber, 1 Gew.-% Rhodium und 1 Gew.-% Kupfer (Ag98Rh1Cu1) aufgeführt:
a) H₂S-Schadgastest:
Eine erste Vergleichsschicht aus reinem Silber (Ag100), eine zweite Vergleichsschicht mit 98 Gew.% Silber, 1 Gew.-% Palladium und 1 Gew.-% Kupfer (Ag98Pd1Cu1) sowie eine dritte Schicht aus einer erfindungsgemäßen Legierung mit 98 Gew.% Silber, 1 Gew.-% Rhodium und 1 Gew.-% Kupfer (Ag98Rh1Cu1) wurden bei einer Temperatur von 25°C einem Schadgas mit einer relativen Luftfeuchte von 75% und einem H₂S - Gehalt von 1ppm ausgesetzt. Nachfolgende Tabelle 1 zeigt das Ergebnis des H₂S-Schadgastests:

**Tabelle 1**

| Versuchsdauer | Ag100 | Ag98Pd1Cu1 | Ag98Rh1Cu1 |
|---|---|---|---|
| 1 h | Eintrübung | Keine Veränderung | Keine Veränderung |
| 2h | Deutliche Eintrübung, Anlauffarbe blau | Leicht gelblich angelaufen | Leicht gelblich angelaufen |
| 4h | Deutliche Eintrübung, Anlauffarbe blau | Gelblich angelaufen | Gelblich angelaufen |
| 6h | Vollständig eingetrübt, Anlauffarbe blau | Gelblich bis bräunlich angelaufen | Gelblich bis bräunlich angelaufen |
| 24h | Vollständig eingetrübt, Anlauffarbe blau | Bräunlich angelaufen | Bräunlich angelaufen |

Während sich die Ag100-Schicht bereits nach einstündiger Versuchsdauer eintrübt, ist das Korrosionsverhalten der Ag98Pd1Cu1-Schicht sowie der Ag98Rh1Cu1-Schicht wesentlich verbessert und im Vergleich zueinander gleich gut.
b) Klimatest:
Eine Vergleichsschicht mit 98 Gew.% Silber, 1 Gew.-% Palladium und 1 Gew.-% Kupfer (Ag98Pd1Cu1) sowie eine Schicht aus einer erfindungsgemäßen Legierung mit 98 Gew.% Silber, 1 Gew.-% Rhodium und 1 Gew.-% Kupfer (Ag98Rh1Cu1) wurden einer Temperatur von 90°C an Luft mit einer relativen Luftfeuchte von 90% ausgesetzt und nach 4h sowie nach 24h beurteilt.
   Es zeigte sich auch hier, dass das Korrosionsverhalten der Ag98Rh1Cu1-Schicht gleichwertig ist zu dem der Ag98Pd1Cu1-Schicht.

Die Aufgabe wird für eine Reflektorschicht dadurch gelöst, dass diese aus
- 0.1 bis 3.0 Gew.-%: Rhodium,
- 0.1 bis 3.0 Gew.-%: Kupfer und/oder Titan und/oder Aluminium und/oder Tantal und/oder Silizium und
Rest Silber besteht.
Die erfindungsgemäße Reflektorschicht weist ein Reflexionsvermögen im sichtbaren Spektralbereichs des Tageslichtes von über 90% auf, wobei gleichzeitig eine hohe Witterungsbeständigkeit gegenüber Chlor und Schwefel auftritt.

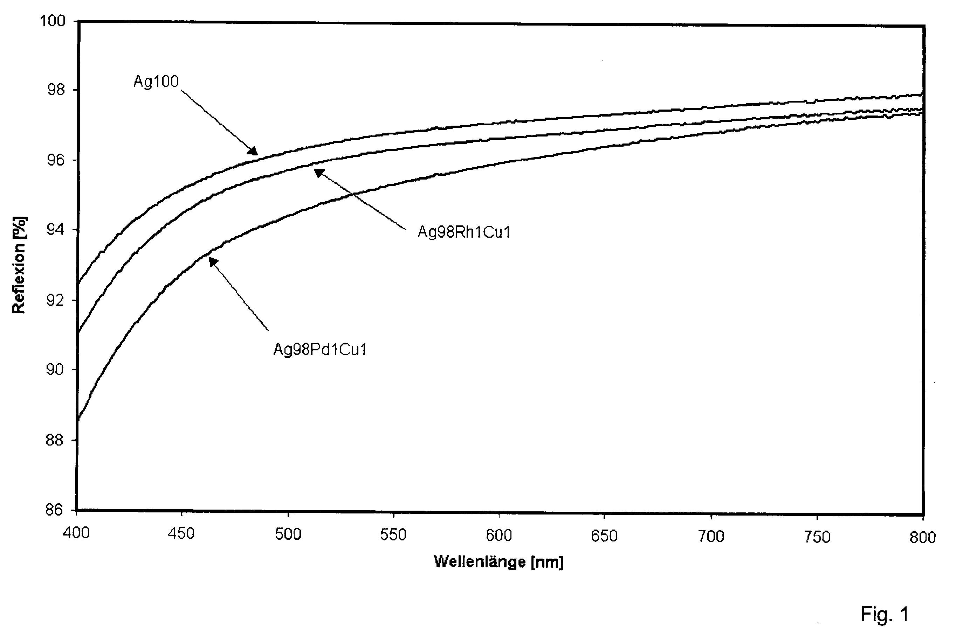

Die Verwendung der erfindungsgemäßen Legierungen zur Bildung von Reflektorschichten ist ideal. Insbesondere die Legierung Ag98Rh1Cu1 hat als Reflektorschicht gegenüber bekannten Materialien für Reflektorschichten wie zum Beispiel Ag98Pd1 Cu1 den Vorteil eines höheren Reflexionsvermögens ( im Vergleich bei einer Wellenlänge von 560nm: Rh 77,2% Reflexion ; Pd 70,4% Reflexion ). In Figur 1 ist die Reflexion ( in % ) der Vergleichsschichten aus Ag100 ( Kurve A ) und Ag98Pd1Cu1 ( Kurve C ) einer Schicht aus einer erfindungsgemäßen Legierung Ag98Rh1Cu1 ( Kurve B ) bei Wellenlängen im Bereich des sichtbaren Spektrums gegenübergestellt. Deutlich ist die verbesserte Reflexion der Schicht aus der erfindungsgemäßen Legierung Ag98Rh1Cu1 ( Kurve B ) gegenüber der Vergleichsschicht aus Ag98Pd1Cu1 ( Kurve C ) zu erkennen.
Aber auch die elektrische Leitfähigkeit von Ag98Rh1Cu1 ist aufgrund des geringeren spezifischen Widerstandes des Rhodiums ( 4,2 Ωcm ) zu dem von Palladium ( 10 Ωcm ) höher als von Ag98Pd1Cu1. Unterschiede im Korrosionsverhalten sind nicht festzustellen ( siehe oben ), so dass eine Reflektorschicht aus einer erfindungsgemäßen Legierung eine ausgezeichnete und im Hinblick auf das Reflexionsvermögen zu bevorzugende Alternative zu bekannten Reflektorschichten darstellt.

Insbesondere die Verwendung der Reflektorschichten zur Reflexion von sichtbarem Tageslicht, vorzugsweise in reflektiven Displays, wird bevorzugt. Da in solchen Displays keine zusätzliche elektrische Hintergrundbeleuchtung vorgesehen ist, ist hier ein besonders hohes Reflexionsvermögen erforderlich, die eine Schicht aus einer erfindungsgemäßen Legierung beziehungsweise die erfindungsgemäße Reflektorschicht in hohem Maße aufweist.

Weiterhin ist eine Verwendung der erfindungsgemäßen Legierungen als Reflektorschichten beziehungsweise der erfindungsgemäßen Reflektorschicht für optische Speichermedien ideal.

Besonders hat sich auch die Verwendung erfindungsgemäßer Legierungen zur Bildung eines Zerstäubungsmaterials für Kathodenzerstäubungsanlagen bewährt. Nachdem Reflektorschichten für optische Speichermedien und in reflektiven Displays in der Regel durch PVD ( physical vapour deposition ) gebildet werden, ist es hilfreich, die Legierung als Zerstäubungsmaterial bzw. als Sputtertarget oder als Verdampfungsmaterial zur Verfügung zu stellen.

## Patentansprüche

1. Legierung, die auf Silber basiert und mindestens drei unterschiedliche chemische Elemente enthält, **dadurch gekennzeichnet,**
**dass** die Legierung aus
0.1 bis 3.0 Gew.-% Re oder Re und mindestens einem Element der Gruppe umfassend Ir, Rh und Pt,
0.1 bis 3.0 Gew.-% Cu und/oder Pt und/oder Ti und/oder Au und/oder Al und/oder Ta und/oder Si und
Rest Silber besteht.

2. Legierung, die auf Silber basiert und mindestens drei unterschiedliche chemische Elemente enthält, **dadurch gekennzeichnet,**
**dass** die Legierung aus
0.1 bis 3.0 Gew.-% Rh,
0.1 bis 3.0 Gew.-% Cu und/oder Ti und/oder Al und/oder Ta und/oder Si und
≥ 94 bis < 99 Gew.-% Silber besteht.

3. Legierung nach Anspruch 2, **dadurch gekennzeichnet, dass** die Legierung aus
0.1 bis 3.0 Gew.-% Rh,
0.1 bis 3.0 Gew.-% Cu oder Ti und
≥ 94 bis < 99 Gew.-% Silber besteht.

4. Legierung nach Anspruch 3, **dadurch gekennzeichnet, dass** die Legierung aus
1.0 Gew.-% Rh,
1.0 Gew.-% Cu oder Ti und
Rest Silber besteht.

5. Legierung, die auf Silber basiert und mindestens drei unterschiedliche chemische Elemente enthält, **dadurch gekennzeichnet,**
**dass** die Legierung aus
0.1 bis 3.0 Gew.-% Pt,
0.1 bis 3.0 Gew.-% Ti und/oder Al und/oder Ta und/oder Si und
Rest Silber besteht.

6. Legierung nach Anspruch 5, **dadurch gekennzeichnet, dass** die Legierung aus
0.1 bis 3.0 Gew.-% Pt,
0.1 bis 3.0 Gew.-% Ti und
Rest Silber besteht.

7. Legierung nach Anspruch 6, **dadurch gekennzeichnet, dass** die Legierung aus
1.0 Gew.-% Pt,
1.0 Gew.-% Ti und
Rest Silber besteht.

8. Legierung, die auf Silber basiert und mindestens drei unterschiedliche chemische Elemente enthält, **dadurch gekennzeichnet,**
**dass** die Legierung aus
0.1 bis 3.0 Gew.-% Ir,
0.1 bis 3.0 Gew.-% Ti und/oder Al und/oder Ta und/oder Si und
Rest Silber besteht.

9. Reflektorschicht, die auf Silber basiert und mindestens drei unterschiedliche chemische Elemente enthält, **dadurch gekennzeichnet,**
**dass** die Reflektorschicht aus
0.1 bis 3.0 Gew.-% Rh,
0.1 bis 3.0 Gew.-% Cu und/oder Ti und/oder Al und/oder Ta und/oder Si und
Rest Silber besteht.

10. Reflektorschicht nach Anspruch 9, **dadurch gekennzeichnet, dass** die Reflektorschicht aus
0.1 bis 3.0 Gew.-% Rh,
0.1 bis 3.0 Gew.-% Cu oder Ti und
Rest Silber besteht.

11. Reflektorschicht nach Anspruch 10, **dadurch gekennzeichnet, dass** die Reflektorschicht aus
1.0 Gew.-% Rh,
1.0 Gew.-% Cu oder Ti und
Rest Silber besteht.

12. Verwendung einer Reflektorschicht nach einem der Ansprüche 9 bis 11 zur Reflexion von sichtbarem Tageslicht.

13. Verwendung nach Anspruch 12, **dadurch gekennzeichnet, dass** die Reflektorschicht zur Reflexion von sichtbarem Tageslicht in reflektiven Displays verwendet wird.

14. Verwendung einer Reflektorschicht nach einem der Ansprüche 9 bis 11 für optische Speichermedien.

15. Verwendung einer Legierung nach einem der Ansprüche 1 bis 8 zur Bildung einer Reflektorschicht.

16. Verwendung nach Anspruch 15, **dadurch gekennzeichnet, dass** die Reflektorschicht zur Reflexion von sichtbarem Tageslicht verwendet wird.

17. Verwendung nach Anspruch 16, **dadurch gekennzeichnet, dass** die Reflektorschicht zur Reflexion von sichtbarem Tageslicht in reflektiven Displays verwendet wird.

18. Verwendung nach Anspruch 15, **dadurch gekennzeichnet, dass** die Reflektorschicht für optische Speichermedien verwendet wird.

19. Verwendung einer Legierung nach einem der Ansprüche 1 bis 8 zur Bildung eines Zerstäubungsmaterials für Kathodenzerstäubungsanlagen.
